# EUROPEAN PATENT SPECIFICATION

(11) **EP 2 935 383 B1**
(45) Date of publication and mention of the grant of the patent: **03.02.2021**
(21) Application number: 13815267.3
(22) Date of filing: 06.12.2013
(51) Int. Cl.: C08G 18/08, C09D 175/04, C08G 18/36, C08G 18/42

(54) **POLYURETHANE DISPERSIONS FOR COATING CONTAINERS**
POLYURETHANDISPERSIONEN ZUR BESCHICHTUNG VON BEHÄLTERN
DISPERSIONS DE POLYURÉTHANE POUR LE REVÊTEMENT DE RÉCIPIENTS

(30) Priority: 20.12.2012 US 201261739810 P; 27.02.2013 US 201313778299; 11.03.2013 US 201313792334
(43) Date of publication of application: 28.10.2015
(73) Proprietor: PPG Industries Ohio, Inc., Cleveland, OH 44111 (US)
(72) Inventor: RICHMAN, Courtney, Gibsonia, Pennsylvania 15044 (US); DUDIK, John M., Apollo, Pennsylvania 15613 (US); FUHRY, Mary Ann M., Butler, Pennsylvania 16001 (US)
(74) Representative: f & e patent
(86) International application number: PCT/US2013/073567
(87) International publication number: WO 2014/099413

(56) References cited:
- DE-A1- 19 930 961
- US-A1- 2010 260 954
- US-A1- 2012 145 721

## Description

### CROSS RELATED APPLICATIONS

### FIELD OF INVENTION

The present invention relates to a container coated at least in part with a coating comprising a polyurethane dispersion, wherein the coating is substantially saturated and free of vinyl monomers or polymers.

### BACKGROUND INFORMATION

The application of various polymeric coatings to metallic substrates, including metal food and beverage containers, to retard or inhibit corrosion is well established. Coatings are applied to the interior of such containers to prevent the contents from contacting the metal of the container. Contact between the metal and the food or beverage can lead to corrosion of the metal container, which can then contaminate the food or beverage. This is particularly true when the contents of the container are acidic in nature, such as tomato-based products and soft drinks. Further, the coatings should be flexible since the coatings are typically applied to planar metal substrates such as metal coils and the coated metal coils formed such as by a drawing process to form a container body or stamped to form a can end.

In addition to corrosion protection, coatings for food and beverage containers should be non-toxic, and should not adversely affect the taste of the food or beverage in the can. Resistance to "popping", "blushing" and/or "blistering" is also desired.

Various epoxy-based coatings and polyvinyl chloride-based coatings have been used in the past to coat the interior of metal cans to prevent corrosion. The recycling of materials containing polyvinyl chloride or related halide-containing vinyl polymers can generate toxic by-products, however; moreover, these polymers can be formulated with epoxy-functional plasticizers. Typically, epoxy-based coatings are prepared from monomers such as bisphenol A ("BPA") and bisphenol A diglycidylether ("BADGE"), which are being reported as having negative health effects. While attempts have been made to scavenge the residual unreacted monomer with, for example, acid functional polymers, this does not always adequately address the problem; some free BPA, BADGE or their by-products may still remain. Government authorities, particularly in Europe and Canada, are restrictive on the amount of free BPA, BADGE and/or their by-products that are acceptable. Thus, there is a need for food and beverage can coatings that have acceptable flexibility, adhesion to metal, and/or corrosion resistance and that are substantially free from BPA, BADGE, and, in some cases, other products.

US 2010/0260954 discloses a coating composition suitable for food and beverage packaging containers comprising a polymer that includes a backbone having one or more polycyclic groups.

Container coatings based on vinyl monomers and polymers are known but such coatings often contain residual vinyl monomers that are undesirable. Also, container coatings based on unsaturated compounds such as polybutadiene are known; however, these coatings, because of the unsaturated content, can impart undesirable odor and/or taste to the container contents, i.e., poor organoleptic properties.

### SUMMARY OF THE INVENTION

The present invention is directed to an article comprising:
a) a metal substrate of a food or beverage container including a portion thereof,
b) a coating composition applied on at least a portion of the substrate, the coating composition comprising an aqueous polyurethane dispersion in which the polyurethane is the reaction product of an organic polyisocyanate and a hydrophobic polyester polyol, the hydrophobic polyester polyol being prepared by reacting an excess of polyol with a polycarboxylic acid having a hydrocarbon chain containing at least 20 contiguous carbon atoms between the carboxylic acid groups, the dispersion having an iodine value determined using ASTM D 5758-02 (Reapproved 2006) entitled "Standard Method for Determination of Iodine Values of Tall Oil Fatty Acids" of less than 5 and containing less than 5 percent by weight vinyl monomer or polymer in the polyurethane dispersion based on total weight of the dispersion.

### DETAILED DESCRIPTION OF THE INVENTION

The present invention is generally directed to containers coated at least in part with a coating comprising a polyurethane dispersion. As noted above, the coating is substantially free of vinyl monomers or polymers and is essentially saturated, that is, having an iodine value of less than 5, usually the lower limit for testing for unsaturation. The aforementioned iodine values correspond to the number of grams of iodine that will react with the double bonds present in 100 grams of the material tested. Iodine values may be determined, for example, using ASTM D 5758-02 (Reapproved 2006) entitled "Standard Method for Determination of Iodine Values of Tall Oil Fatty Acids", and are expressed in terms of mole equivalents of iodine per 100 grams of resin. The phrase "substantially free of vinyl monomers or polymers means there is less than 5, such as less than 3, typically less than 2 percent by weight vinyl monomer or polymer in the polyurethane dispersion based on total weight of the dispersion.

The term "polyurethane dispersion" as used in the context of the present invention refers to a dispersion that has polyurethane linkages/groups in the backbone. A wide variety of polyurethanes can be used in the dispersion according to the present invention.

In certain embodiments, the polyurethane comprises a reaction product of an organic polyisocyanate and a hydrophobic polyester.

Hydrophobic polyesters are prepared by reacting an excess of polyol with a polycarboxylic acid having a hydrocarbon chain containing at least 20 contiguous carbon atoms between the carboxylic acid groups.

Among the polyols that may be used to prepare the polyester are diols, triols, tetrols and mixtures thereof. Examples of the polyols are preferably those containing from 2 to 10 carbon atoms such as aliphatic polyols. Specific examples include but are not limited to the following compositions: di-trimethylol propane (bis(2,2-dimethylol)dibutylether); pentaerythritol; 1,2,3,4-butanetetrol; sorbitol; trimethylol propane; trimethylol ethane; 1,2,6-hexanetriol; glycerine; trishydroxyethyl isocyanurate; dimethylol propionic acid; 1,2,4-butanetriol; TMP/epsilon-caprolactone triols; ethylene glycol; 1,2-propanediol; 2-methyl-1,3-propanediol; 1,3-propanediol; 1,4-butanediol; 1,5-pentanediol; 1,6-hexanediol; neopentyl glycol; diethylene glycol; dipropylene glycol; 1,4-cyclohexanedimethanol and 2,2,4-trimethylpentane-1,3 diol. The polyol has a functionality greater than 2 such as trimethylolpropane and pentaerythritol.

Examples of suitable polycarboxylic acids are linear or branched polycarboxylic acid having from 2 to 4 carboxylic acid groups and containing a hydrocarbon chain of at least 20, preferably at least 26, and more preferably from 26 to 40 contiguous carbon atoms between the carboxylic acid groups. Examples of suitable polycarboxylic acids are dimer and polymeric fatty polycarboxylic acids such as those sold under the trademark EMPOL such as EMPOL 1008, available from Cognis.

Examples of organic polyisocyanate include isocyanate compound having 1 isocyanate group; a polyisocyanate having 2 isocyanate groups, 3 isocyanate groups, or 4 or more isocyanate groups; or a mixture thereof. Suitable diisocyanates may include isophorone diisocyanate (i.e., 5-isocyanato-1-isocyanatomethyl-1,3,3-trimethylcyclohexane); 5-isocyanato-1 -(2-isocyanatoeth-1-yl)-1,3,3-trimethylcyclohexane; 5-isocyanato-1-(3-isocyanatoprop-1-yl)-1,3,3-trimethylcyclohexane; 5-isocyanato-(4-isocyanatobut-1-yl)-1,3,3-trimethylcyclohexane; 1-isocyanato-2-(3-isocyanatoprop-1-yl)cyclohexane; 1-isocyanato-2-(3-isocyanatoeth-1-yl)cyclohexane; 1-isocyanato-2-(4-isocyanatobut-1-yl)cyclohexane; 1,2-diisocyanatocyclobutane; 1,3-diisocyanatocyclobutane; 1,2-diisocyanatocyclopentane; 1,3-diisocyanatocyclopentane; 1,2-diisocyanatocyclohexane; 1,3-diisocyanatocyclohexane; 1,4-diisocyanatocyclohexane; dicyclohexylmethane 2,4'-diisocyanate; trimethylene diisocyanate; tetramethylene diisocyanate; pentamethylene diisocyanate; hexamethylene diisocyanate; ethylethylene diisocyanate; trimethylhexane diisocyanate; heptamethylene diisocyanate; 2-heptyl-3,4-bis(9-isocyanatononyl)-1-pentyl-cyclohexane; 1,2-, 1,4-, and 1,3-bis(isocyanatomethyl)cyclohexane; 1,2-, 1,4-, and 1,3-bis(2-isocyanatoeth-1-yl)cyclohexane; 1,3-bis(3-isocyanatoprop-1-yl)cyclohexane; 1,2-, 1,4- or 1,3-bis(4-isocyanatobuty-1-yl)cyclohexane; liquid bis(4-isocyanatocyclohexyl)-methane; and derivatives or mixtures thereof.

In some embodiments, the isocyanate compounds are preferably non-aromatic (e.g., aliphatic). Non-aromatic isocyanates are particularly desirable for coating compositions intended for use on an interior surface of a food or beverage can. Isophorone diisocyanate (IPDI) and hexamethylene isocyanate (HMDI) are preferred non-aromatic isocyanates. In certain preferred embodiments, the polyurethane polymer does not include any structural units derived from aromatic isocyanate compounds.

In certain embodiments, the hydrophobic polyester polyol used according to the present invention will have a weight average molecular weight ("Mw"), as determined by gel permeation chromatography against a styrene standard of 1,000 or greater, such as 2,000 or greater, 4,000 or greater, or 10,000 or greater. In other embodiments, the Mw of the hydrophobic polyester will be 30,000 or lower, such as 20,000 or lower or 15,000 or lower. In a specific embodiment, the hydrophobic polyester has an Mw of 2,000 to 4,000. The hydroxyl value of the hydrophobic polyester is typically from 110 to 500, such as 150 to 160.

By hydrophobic polyester is meant there is a hydrocarbon chain of at least 20, such as 20 to 40, such as 36 contiguous carbon atoms between ester groups attributed to the polycarboxylic acid.

The esterification reaction is carried out in accordance with techniques that are well known to those skilled in the art of polymer chemistry and a detailed discussion is not believed to be necessary. Generally, the reaction can be conducted by combining the ingredients and heating to a temperature of about 160° C. to about 230° C. Further details of the esterification process are disclosed in U.S. Patent
No. 5,468,802 at column 3, lines 4-20 and 39-45.

In certain embodiments, the reaction mixture from which the polyurethane is made further comprises an additional hydroxyl functional compound that comprises acid functionality, that is, an acid functional polyol. Suitable examples include dimethanol propionic acid, 2,2-bis(hydroxymethyl)butyric acid, tartaric acid, 3,5-dihydroxybenzoic acid, and ascorbic acid and its isomers. The acid functional polyol is typically used as a separate reactant along with the hydrophobic polyester polyol. The acid functionality is neutralized with base such as an amine and aids in the dispersibility of the polyurethane in aqueous medium.

In certain embodiments, the polyurethane is prepared by reacting the organic polyisocyanate, hydrophobic polyester polyol and acid functional polyol, where used, with a stoichiometric excess of isocyanate to hydroxyl to form an NCO-prepolymer. The prepolymer can then be reacted with a chain extender.

Chain extension may be achieved by reaction of the polyurethane prepolymer with one or more chain extenders. This may occur, for example, by reacting one or more chain extenders with terminal and/or pendant isocyanate groups present on the polyurethane prepolymer. Suitable chain extenders may include, for example, alkyl amino alcohols, cycloalkyl amino alcohols, heterocyclic amino alcohols, polyamines (e.g., ethylene diamine, diethylene triamine, triethylene tetra amine, melamine, etc.), hydrazine, substituted hydrazine, hydrazide, amides, water, other suitable compounds having active hydrogen groups, ketimines prepared from any of the above amines, and combinations thereof. Preferably, the chain extension is conducted with organic polyamines, more preferably aliphatic polyamines having at least two primary amine groups. Diamines are presently preferred. If a chain extender is utilized, the linkage formed between the chain extender and the polyurethane prepolymer is preferably a urethane or urea linkage, more preferably a urea linkage.

The prepolymer may be chain extended at any suitable time, including before the dispersing step, simultaneous to the dispersing step, after the dispersing step, or any combination thereof.

Typically, in forming the polyurethane dispersion, the organic polyisocyanate is added dropwise to a mixture of the hydrophobic polyester polyol and acid functional polyester. A catalyst such as tertiary amine is added and then allowed to exotherm, keeping the temperature below 90° C. to form the NCO-prepolymer. Water, organic solvent, diamine chain extender and base such as an amine are added to the NCO-prepolymer and the reaction mixture heated at a temperature of 40-60° C. for 20 to 60 minutes to form the polyurethane dispersion.

The polyurethane is present in the aqueous dispersion in amounts of 25% to 50%, such as 30% to 36% by weight based on weight of resin solids.

The aqueous polyurethane dispersions used according to the present invention typically have microparticle sizes of 0.005 to 2 microns, such as 0.01 to 0.2 microns, as measured by light scattering on a Malvern MASTERSIZER Zetasizer 3000 HSa instrument.

As noted above, the polyurethane dispersions described herein are aqueous, but may further include an organic solvent. Any suitable solvent can be used including an ester, ketone, glycol ether, alcohol, hydrocarbon or mixtures thereof. Suitable ester solvents include alkyl acetates such as ethyl acetate, n-butyl acetate, n-hexyl acetate, and mixtures thereof. Examples of suitable ketone solvents include methyl ethyl ketone, methyl isobutyl ketone, and mixtures thereof. Examples of suitable hydrocarbon solvents include toluene, xylene, aromatic hydrocarbons such as those available from Exxon-Mobil Chemical Company under the SOLVESSO trade name, and aliphatic hydrocarbons such as hexane, heptanes, nonane, and those available from Exxon-Mobil Chemical Company under the ISOPAR and VARSOL trade names.

The polyurethane dispersions typically contain up to 30 percent by weight organic solvent and at least 70 percent by weight water, the percent being based on total weight of solvents in the dispersion.

The aqueous dispersions of the present invention do not form homogeneous solutions. They are characterized by discrete particles that are dispersed in a separate, continuous phase, referred to as microparticles. The present aqueous dispersions may appear translucent or opaque, as is characteristic of dispersions.

The coating compositions can further comprise a crosslinking agent. In certain embodiments, the crosslinking agent will react with active hydrogens of the polyurethane such as those associated with unreacted amino groups or hydroxyl groups of the chain extender to form a thermally crosslinked coating. Suitable crosslinking agents can be chosen by those skilled in the art based upon the chemistry of the dispersion and may include, for example, aminoplast crosslinkers, phenolic crosslinkers, or blocked or unblocked isocyanates. Aminoplast crosslinkers can be melamine based, urea based, glycoluril, or benzoguanamine based. Melamine crosslinkers are widely commercially available, such as from Cytec Industries, Inc., in their CYMEL line. Phenolic crosslinkers include, for example, novolacs and resoles. For use on food cans, phenolic resoles that are not derived from bisphenol A are particularly suitable. Phenol, cresol and xylenol based resoles are particularly suitable. In certain embodiments, lower amounts of crosslinker than are typically used with polyester-containing systems can be used according to the present invention while still achieving suitable performance. The crosslinking agent is typically present in the aqueous dispersion in amounts of 1 to 25, such as 10 to 20 percent by weight based on weight of resin solids in the dispersion.

Optional ingredients can be included in the coating composition. Typically, the coating composition will contain a diluent, such as water, or an organic solvent or a mixture of water and organic solvent to dissolve or disperse the ingredients of the composition. The organic solvent is selected to have sufficient volatility to evaporate essentially entirely from the coating composition during the curing process such as during heating from 175-205° C. for about 5 to 15 minutes. Examples of suitable organic solvents are aliphatic hydrocarbons such as mineral spirits and high flash point VM&P naphtha; aromatic hydrocarbons such as benzene, toluene, xylene and solvent naphtha 100, 150, 200 and the like; alcohols, for example, ethanol, n-propanol, isopropanol, n-butanol, amyl alcohol and the like; ketones such as acetone, cyclohexanone, methylisobutyl ketone and the like; esters such as ethyl acetate, butyl acetate, and the like; glycols such as butyl glycol, glycol ethers such as methoxypropanol and ethylene glycol monomethyl ether and ethylene glycol monobutyl ether and the like. Mixtures of various organic solvents can also be used.

Adjuvant resins such as polyester polyols and polyether polyols may be included in the coating compositions to maximize certain properties of the resultant coating. When present, the adjuvant resin is used in amounts of up to 50, typically 2-50 percent by weight based on weight of resin solids of the coating composition.

Another optional ingredient that is typically present in the coating composition is a catalyst to increase the rate of cure or crosslinking of the coating compositions. Generally acid catalyst may be used and is typically present in amounts of about 0.05 to 5 percent by weight. Examples of suitable catalyst are dodecyl benzene sulfonic acid, methane sulfonic acid, paratoluene sulfonic acid, dinonyl naphthalene disulfonic acid and phenyl phosphonic acid.

Another useful optional ingredient is a lubricant, for example, a wax which facilitates manufacture of metal closures by imparting lubricity to the sheets of the coated metal substrate. Preferred lubricants include, for example, carnauba wax and polyethylene-type lubricants. If used, the lubricant is preferably present in the coating compositions of at least 0.1 percent by weight based on weight of resin solids in the coating composition.

Another useful optional ingredient is a pigment such as titanium dioxide. If used, the pigment is present in the coating compositions in amounts no greater than 70 percent by weight, preferably no greater than 40 percent by weight based on total weight of solids in the coating composition.

Surfactants can optionally be added to the coating composition to aid in flow and wetting of the substrate. Examples of suitable surfactants include, but are not limited to, nonyl phenol polyether and salts. If used, the surfactant is present in amounts of at least 0.01 percent and no greater than 10 percent based on weight of resin solids in the coating composition.

In certain embodiments, the compositions used in the practice of the invention are substantially free, may be essentially free and may be completely free of bisphenol A and derivatives or residues thereof, including bisphenol A ("BPA") and bisphenol A diglycidyl ether ("BADGE"). Such compositions are sometimes referred to as "BPA non intent" because BPA, including derivatives or residues thereof, are not intentionally added but may be present in trace amounts because of unavoidable contamination from the environment. The compositions can also be substantially free and may be essentially free and may be completely free of bisphenol F and derivatives or residues thereof, including bisphenol F and bisphenol F diglycidyl ether ("BPFG"). The term "substantially free" as used in this context means the compositions contain less than 1000 parts per million (ppm), "essentially free" means less than 100 ppm and "completely free" means less than 20 parts per billion (ppb) of any of the above-mentioned compounds, derivatives or residues thereof.

In certain embodiments, the coatings of the present invention have high flexibility. By high flexibility is meant that the coated substrate can be stamped, bent, formed and/or drawn and the coating will remain intact; that is, it will not substantially crack, split and/or delaminate from the substrate. The flexibility of the coating can be measured, for example, by the wedge bend test method as described in the examples.

In certain embodiments, the coatings of the present invention are retortable. By "retortable" is meant that the coatings can withstand being processed at 130 °C. in a closed retort for one hour while being immersed in an aqueous medium containing 3% salt and 2% acetic acid by weight.

As noted above, the coatings used according to the present invention are substantially free of vinyl monomers or polymers. Accordingly, the present coatings are distinct from coatings used in the art employing vinyl polymers. The discovery that such monomers or polymers can be substantially eliminated from a coating is significant, in that such coatings are more flexible and offer an additional advantage of being more resistant to aggressive food and drinks, particularly acidic food and drinks. Also, the compositions are substantially free of unsaturation such as that introduced by polybutadiene. This is significant because unsaturated compounds are known to potentially change the taste or odor of the container contents, which is undesirable. By "substantially free of unsaturation" is meant an iodine value less than 5, particularly 3 and less.

Cured coatings of the invention preferably adhere well to metal (e.g., steel, tin-free steel (TFS), tin plate, electrolytic tin plate (ETP), aluminum, etc.) and provide high levels of resistance to corrosion or degradation that may be caused by prolonged exposure to, for example, food or beverage products. The coatings may be applied to any suitable surface, including inside surfaces of containers, outside surfaces of containers, container ends, and combinations thereof. The cured coatings typically have dry film weights of 1 to 10 milligrams/cm2.

The coatings used according to the present invention are particularly suitable for use as a packaging coating. The application of various pretreatments and coatings to packaging is well established. Such treatments and/or coatings, for example, can be used in the case of metal cans, wherein the treatment and/or coating is used to retard or inhibit corrosion, provide a decorative coating, provide ease of handling during the manufacturing process, and the like. Coatings can be applied to the interior of such cans to prevent the contents from contacting the metal of the container. Contact between the metal and a food or beverage, for example, can lead to corrosion of a metal container, which can then contaminate the food or beverage. This is particularly true when the contents of the can are acidic in nature. The coatings applied to the interior of metal cans also help prevent corrosion in the headspace of the cans, which is the area between the fill line of the product and the can lid; corrosion in the headspace is particularly problematic with food products having a high salt content. Coatings can also be applied to the exterior of metal cans. Certain coatings of the present invention are particularly applicable for use with coiled metal stock, such as the coiled metal stock from which the ends of cans are made ("can end stock"), and end caps and closures are made ("cap/closure stock"). Since coatings designed for use on can end stock and cap/closure stock are typically applied prior to the piece being cut and stamped out of the coiled metal stock, they are typically flexible and extensible. For example, such stock is typically coated on both sides. Thereafter, the coated metal stock is stamped. For can ends, the metal is then scored for the "pop-top" tab, which is separately fabricated, then attached to the can end stake. The end is then attached to the can body by an edge rolling process to form a sterile double-seam seal. A similar procedure is done for "easy open" can ends. For easy open can ends, a score substantially around the perimeter of the lid allows for easy opening or removing of the lid from the can, typically by means of a pull tab. For caps and closures, the cap/closure stock is typically coated, such as by roll coating, and the cap or closure stamped out of the stock; it is possible, however, to coat the cap/closure after formation. Coatings for cans subjected to relatively stringent temperature and/or pressure requirements should also be resistant to cracking, popping, corrosion, blushing and/or blistering.

Accordingly, the present invention is directed to a container coated at least in part with any of the coating compositions described above. A "container" is anything used to contain another item. It can be made of metal or non-metal, for example, plastic or laminate, and be in any form. In certain embodiments, the package is a laminate tube. In certain embodiments, the container is a metal can. The term "metal can" includes any type of metal can, container or any type of receptacle or portion thereof used to hold something. One example of a metal can is a food can; the term "food can(s)" is used herein to refer to cans, containers or any type of receptacle or portion thereof used to hold any type of food and/or beverage. The term "metal can(s)" specifically includes food cans and also specifically includes "can ends", which are typically stamped from can end stock and used in conjunction with the packaging of beverages. The term "metal cans" also specifically includes metal caps and/or closures such as bottle caps, screw top caps and lids of any size, lug caps, and the like. The metal cans can be used to hold other items as well, including, but not limited to, personal care products, bug spray, spray paint, and any other compound suitable for packaging in an aerosol can. The cans can include "two-piece cans" and "three-piece cans" as well as drawn and ironed one-piece cans; such one-piece cans often find application with aerosol products. Containers coated according to the present invention can also include plastic bottles, plastic tubes, laminates and flexible packaging, such as those made from PE, PP, PET and the like. Such packaging could hold, for example, food, toothpaste, personal care products and the like.

The coating can be applied to the interior and/or the exterior of the package. For example, the coating can be roll coated onto metal used to make a two-piece food can, a three-piece food can, can end stock and/or cap/closure stock. The coating can also be sprayed as a liner for two-piece food or beverage cans. In some embodiments, the coating is applied to a coil or sheet by roll coating; the coating is then cured by heating and can ends are stamped out and fabricated into the finished product, i.e. can ends. In other embodiments, the coating is applied as a rim coat to the bottom of the can; such application can be by roll coating. The rim coat functions to reduce friction for improved handling during the continued fabrication and/or processing of the can. In certain embodiments, the coating is applied to caps and/or closures; such application can include, for example, a protective varnish that is applied before and/or after formation of the cap/closure and/or a pigmented enamel post applied to the cap, particularly those having a scored seam at the bottom of the cap. Decorated can stock can also be partially coated externally with the coating described herein, and the decorated, coated can stock used to form various metal cans.

The containers of the present invention can be coated with any of the compositions described above by any means known in the art, such as spraying, roll coating, dipping, flow coating and the like; the coating may also be applied by electrocoating when the substrate is conductive. The appropriate means of application can be determined by one skilled in the art based upon the type of container being coated and the type of function for which the coating is being used. The coatings described above can be applied over the substrate as a single layer or as multiple layers with multiple heating stages between the application of each layer, if desired. After application to the substrate, the coating composition may be cured by any appropriate means.

The coatings can be applied in certain embodiments to a dry film thickness of 2.54 µm (0.10 mils) to 25.4 µm (1.0 mils), such as from 2.54 to 12.7 µm (0.10 to 0.50 mils), or from 3.81 to 7.62 µm (0.15 to 0.30 mils). Thicker or thinner dry film thicknesses are also within the scope of the present invention.

Any numerical range recited herein is intended to include all sub-ranges subsumed therein. Plural encompasses singular and vice versa.

### EXAMPLES

The following examples are offered to aid in understanding of the present invention and are not to be construed as limiting the scope thereof. Unless otherwise indicated, all parts and percentages are by weight.

### Example A

A polyester was prepared from the following ingredients as described below:

| Ingredients | Parts by Weight (grams) |
|---|---|
| 2-Methyl-1,3-propanediol | 450 |
| EMPOL 1008, C36 dimer acid | 1455 |

A total of 450 grams of 2-methyl-1,3-propanediol and 1455 grams of EMPOL 1008 C36 dimer acid were added to a suitable reaction vessel equipped with a stirrer, temperature probe, a steam heated reflux condenser with a distillation head. The reactor was equipped with an inlet used to flush the reactor with a flow of nitrogen. The contents of the flask were heated to 130 °C. and the nitrogen cap was switched to a nitrogen sparge. Heating was continued to 180 °C. at which time water began to evolve from the reaction. The temperature of the reaction mixture was raised to 230 °C. in stages and held at that temperature until 28 grams of water had been distilled and the acid value of the reaction mixture measured 1.64. The contents of the reactor were cooled and poured out. The final material was a viscous liquid material with a measured solids of 93.9%, a measured bubble viscosity of Z3, a hydroxyl value of 152.2, and a weight average molecular weight of 2,804 as measured against a polystyrene standard.

### Example B

A polyurethane resin dispersion was prepared from the following ingredients as described below:

| Ingredients | Parts by Weight (grams) |
|---|---|
| Polyester of Example A | 185 |
| Dimethylol propionic acid | 31 |
| Isophorone diisocyanate | 117.5 |
| Methyl ethyl ketone | 83 |
| Triethylamine | 0.59 |
| Deionized water | 535 |
| Isophorone diamine | 5.1 |
| Dimethylethanol amine | 18.5 |
| Deionized water | 19.5 |
| Deionized water | 19.5 |

A total of 185 grams of the polyester of Example A and 29 grams of dimethylol propionic acid were added to a suitable reaction vessel equipped with a stirrer, temperature probe and a reflux condenser. The reactor was equipped with an inlet used to flush the reactor with a flow of nitrogen. The mixture was heated to 60 °C. A total of 117.5 grams of isophorone diisocyanate was added to the reactor dropwise via an addition funnel over 10 minutes and the contents were mixed thoroughly. A total of 83 grams of methyl ethyl ketone was used to rinse the addition funnel and added to reaction mixture. A total of 0.59 grams of triethylamine was added to the reactor and the contents were stirred and allowed to exotherm no higher than 85 °C. When the exotherm subsided, the reaction was maintained at 80 °C. and held until the isocyanate equivalent weight measured 4353 (target range: 4300-4500 g/eq.). The temperature setting of the reaction was reduced to 50° C. A pre-heated (55 °C.) mixture of 535 grams of deionized water, 5.1 grams isophorone diamine, and 18.5 grams of dimethylethanol amine were added to the reactor dropwise via an addition funnel. A total of 19.5 grams of deionized water was used to rinse the addition funnel and added to the reaction. The reaction was held at 50 °C. for at least 30 minutes. The dispersion was very thick so an additional 19.5 grams of deionized water was added to reaction mixture and stirred. The contents of the reactor were cooled and poured out. The final material was a liquid dispersion with a measured solids of 32% and a number average particle size of 13.1 nm measured via a Malvern high performance particle sizer (HPPS).

Paints (PUD) were prepared from the polyurethane dispersion by adding the materials in the order shown in Table 1 into small lined paint cans under modest agitation with a standard mixing blade. The polyurethane dispersion was thinned with amyl alcohol at 10% on resin solids by weight. It was formulated with CYMEL 327 at 10%, 15%, 20%, and 25% solids on total resin solids by weight. All paints were reduced to 30% weight solids with deionized water.

**Table 1**

| Paint Example | %TS | 1 | | 2 | | 3 | | 4 | |
|---|---|---|---|---|---|---|---|---|---|
| | | Wght | NV | Wght | NV | Wght | NV | Wght | NV |
| Polyurethane Dispersion of Example B | 32.0 | 49.1 | 15.7 | 46.6 | 14.9 | 43.8 | 14.0 | 40.9 | 13.1 |
| Deionized Water | | 5.4 | 0.0 | 7.0 | 0.0 | 8.9 | 0.0 | 10.9 | 0.0 |
| Amyl Alcohol | | 1.6 | | 1.5 | | 1.4 | | 1.3 | |
| CYMEL 327¹ | 90.0 | 1.9 | 1.8 | 2.9 | 2.6 | 3.9 | 3.5 | 4.9 | 4.4 |
| Total | | 58.0 | 17.5 | 58.0 | 17.5 | 58.0 | 17.5 | 58.0 | 17.5 |
| %TS | | 30.1 | | 30.2 | | 30.2 | | 30.2 | |
| % Xlinker on NV | | 10.0 | | 15.0 | | 20.0 | | 25.0 | |

| | | | | | | | | | |
|---|---|---|---|---|---|---|---|---|---|
| ¹Aminoplast from Cytcc Industries. | | | | | | | | | |

### Example C

A polyester was prepared from the following ingredients as described below:

| Ingredients | Parts by Weight (grams) |
|---|---|
| 2-Methyl-1,3-propanediol | 300 |
| EMPOL 1008, C36 dimer acid | 963 |
| Dibutyltin oxide | 1.26 |
| Triphenylphosphite | 0.63 |

A total of 300 grams of 2-methyl-1,3-propanediol, 963 grams of EMPOL 1008 C36 dimer acid, 1.26 grams of dibutyltin oxide and 0.63 grams of triphenylphosphite were added to a suitable reaction vessel equipped with a stirrer, temperature probe, a steam heated reflux condenser with a distillation head. The reactor was equipped with an inlet used to flush the reactor with a flow of nitrogen. The contents of the flask were heated to 130 °C. and the nitrogen cap was switched to a nitrogen sparge. Heating was continued to 161 °C. at which time water began to evolve from the reaction. The temperature of the reaction mixture was raised to 180 °C. and finally to 220° C. in stages and held at that temperature until 39 grams of water had been distilled and the acid value of the reaction mixture measured <2. The contents of the reactor were cooled and poured out. The final material was a viscous liquid material with a measured solids of 93%, a measured bubble viscosity of Z3-, a hydroxyl value of 151, and a weight average molecular weight of 3,020 as measured against a polystyrene standard.

### Example D (Comparative)

A polyurethane resin prepared with hydroxy-terminated polybutadiene was prepared from the following ingredients and dispersed in aqueous medium as described below:

| Ingredients | Parts bv Weight (grams) |
|---|---|
| Polyester of Example C | 112 |
| Polybutadiene R45HTLO | 67 |
| Dimethylol propionic acid | 29 |
| Isophorone diisocyanate | 112 |
| Methyl ethyl ketone | 80 |
| Dibutyltin dilaurate | 0.51 |
| Deionized water | 515 |
| Huntsman XTA-801 diamine | 9.8 |
| Dimethylethanol amine | 17.5 |
| Deionized water | 29 |
| Deionized water | 30 |

A total of 112 grams of the polyester of Example C, 67 grams of polybutadiene R45HTLO, and 29 grams of dimethylol propionic acid were added to a suitable reaction vessel equipped with a stirrer, temperature probe and a reflux condenser. The reactor was equipped with an inlet used to flush the reactor with a flow of nitrogen. The mixture was heated to 60 °C. A total of 112 grams of isophorone diisocyanate was added to the reactor dropwise via an addition funnel over 10 minutes and the contents were mixed thoroughly. A total of 80 grams of methyl ethyl ketone was used to rinse the addition funnel and added to reaction mixture. A total of 0.51 grams of dibutyltin dilaurate was added to the reactor and the contents were stirred and allowed to exotherm to 92 °C. When the exotherm subsided, the reaction was maintained at 80 °C. and held until the isocyanate equivalent weight measured 1830 (target range: 1650-1870 g/eq.). The temperature setting of the reaction was reduced to 50° C. A pre-heated (55 °C.) mixture of 515 grams of deionized water, 9.8 grams of Huntsman XTA-801 diamine, and 17.5 grams of dimethylethanol amine were added to the reactor dropwise via an addition funnel. A total of 29 grams of deionized water was used to rinse the addition funnel and added to the reaction. The reaction was held at 50 °C. for at least 30 minutes. The dispersion was very thick so an additional 30 grams of deionized water was added to reaction mixture and stirred. The contents of the reactor were cooled and poured out. The final material was a liquid dispersion with a measured solids of 34% and a number average particle size of 25.8 nm measured via zeta potential dynamic light scattering.

### Example E

A polyester was prepared from the following ingredients as described below:

| Ingredients | Parts by Weight (grams) |
|---|---|
| 1,6-Hexanediol | 500 |
| Adipic acid | 225 |
| Isophthalic acid | 260 |
| Maleic anhydride | 50 |

A total of 500 grams of 1,6-hexanediol, 225 grams adipic acid, 260 grams isophthalic acid, and 50 grams maleic anhydride, were added to a suitable reaction vessel equipped with a stirrer, temperature probe, and a packed column with a distillation head. The reactor was equipped with an inlet used to flush the reactor with a flow of nitrogen. The contents of the flask were heated to 150 °C and water began to evolve from the reaction. Heating was continued to 165 °C to maintain distillation. The temperature of the reaction mixture was raised to 210 °C in stages and held at that temperature until 120 grams of water had been distilled and the acid value of the reaction mixture measured ~4. The contents of the reactor were cooled and poured out. The final material was a viscous liquid material with a measured hydroxyl value of 66.6, an acid value of 4.32, and a weight average molecular weight of 4,979 as measured against a polystyrene standard.

### Example F

A polyurethane resin dispersion was prepared from the following ingredients as described below:

| Ingredients | Parts by Weight (grams) |
|---|---|
| Example E, diluted to 76 wt% in butyl methacrylate | 197.4 |
| 1,4-Butanediol | 3.3 |
| Dimethylol propionic acid | 18.4 |
| Triethylamine | 5.5 |
| Ionol | 0.22 |
| Triphenylphosphite | 0.22 |
| Isophorone diisocyanate | 50.1 |
| Butyl methacrylate | 16.7 |
| Deionized water | 262.7 |
| Dimethylethanol amine | 4.1 |
| Deionized water | 422.9 |

A total of 197.4 grams of 76% Example E in butyl meythacrylate, 3.3 grams 1,4-butanediol, 18.4 grams of dimethylol propionic acid, 5.5 grams triethylamine, 0.22 grams ionol, and 0.22 grams triethylphosphite were added to a suitable reaction vessel equipped with a stirrer, temperature probe and a reflux condenser. The reactor was equipped with an inlet used to flush the reactor with a flow of nitrogen. The mixture was heated to 60 °C and held for 30 minutes. A total of 50.1 grams of isophorone diisocyanate was added to the reactor dropwise via an addition funnel over 20 minutes and the contents were mixed thoroughly. A total of 16.7 grams of butyl methacrylate was used to rinse the addition funnel and added to reaction mixture. The contents were stirred and allowed to exotherm no higher than 90 °C. When the exotherm subsided the reaction was maintained at 90 °C and held until the isocyanate peak measured by infrared spectroscopy disappeared. A pre-heated (70 °C) mixture of 262.7 grams of deionized water and 4.1 grams of dimethylethanol amine were added to the reactor dropwise via an addition funnel over 30 minutes. The reaction was further diluted with 422.9 grams of deionized water. The contents of the reactor were cooled to <40 °C and poured out. The final material was a liquid dispersion with a measured solids of 22.9%, a Brookfield viscosity of 26 mPas (cps), and a number average particle size of 70.2 nm measured via measured via zeta potential dynamic light scattering.

### Example G

A polyurethane-acrylic resin dispersion was prepared from the following ingredients as described below:

| Ingredients | Parts by Weight (grams) |
|---|---|
| Example F polyurethane dispersion | 313.9 |
| Deionized water | 267.3 |
| Styrene | 71.4 |
| Butyl methacrylate | 94.8 |
| Glycidyl methacrylate | 16.3 |
| Benzoin | 2.04 |
| Deionized water | 20 |
| 35% Hydrogen peroxide | 2.04 |
| Deionized water | 20 |
| Benzoin | 0.35 |
| Deionized water | 20 |
| 35% Hydrogen peroxide | 0.35 |

A total of 313.9 grams of Example F and 267.3 grams of deionized water were added to a suitable reaction vessel equipped with a stirrer, temperature probe and a reflux condenser. The reactor was equipped with an inlet used to flush the reactor with a flow of nitrogen. The mixture was heated to 75 °C, stirred at a rate of 280 rpm, and held with a nitrogen sparge for 15 minutes. A 10% portion of a monomer pre-mixture of 71.4 grams of styrene, 94.8 grams of butyl methacrylate, and 16.3 grams of glycidyl methacrylate was added to the reactor and the contents were mixed thoroughly. A total of 2.04 grams of benzoin and 20 grams of water were added to the flask and the reaction was heated to 79 C. At 79 C, a total of 2.04 grams of 35% hydrogen peroxide was added to the flask. The reaction was held for 5 minutes. The reaction temperature was set to 81 C and the remainder A total of 20 grams of deionized water was used to rinse the addition funnel and added to the reaction mixture. The reaction was held for 10 minutes. A total of 0.35 grams of benzoin, 20 grams of water, and 0.35 grams of 35% hydrogen peroxide were added to the reaction. The reaction was held for 2 hours and the contents of the reactor were cooled to <40 °C and poured out. The final material was a liquid dispersion with measured solids of 33.5% and a Brookfield viscosity of 38 mPas (cps).

### Examples 5 & 6 (Comparative)

The polyurethane dispersion of Example D was coalesced with 2-butoxyethanol at 10% on resin solids by weight. This dispersion and the polyurethane-acrylic dispersion of Example G were formulated with CYMEL 327 at 10% solids on total resin solids by weight. The paints were reduced to 30% weight solids with deionized water. The paints were prepared by adding the materials in the order shown in Table 2 into a small lined paint can under modest agitation with a standard mixing blade. After all of the ingredients were added, the paint was stirred for an additional 5 minutes.

**Table 2**

| Paint Example | % TS | 5 | 6 |
|---|---|---|---|
| | | Wght | Wght |
| Polyurethane dispersion of Example D | 34 | 46.2 g | |
| Polyurethane-acrylic dispersion of Example G | 33.5 | | 46.9 |
| Deionized water | | 8.3 | 9.4 |
| 2-Butoxyethanol | | 1.6 | |
| CYMEL 327 | 90 | 1.9 | 1.9 |
| Total | | 58.0 | 58.2 |
| %TS | | 30 | 30 |

Coated panels were obtained by drawing the paints over chrome treated 5182-H481 aluminum panels 127 cm x 330 cm (5"x13") using a wire wound rod to obtain dry coating weights of ∼7.0 mg/square inch. The coated panels were immediately placed into a one zone, gas fired, conveyor oven for 10 seconds and baked to a peak metal temperature of 450° F. (232° C.). The baked panels were immediately quenched in water upon exit from the oven, and evaluated for blister resistance. Panels with blisters were rated as having poor blister resistance and those without blisters were rated as having good blister resistance. They were then dried and cut into smaller test coupons, and their performance was compared to a commercial coating made with bisphenol A.

The coatings were evaluated for the number of double rubs by hand it took to soften and break through the coating with a rag saturated with methyl ethyl ketone. Their flexibility was evaluated with a wedge bend test. For this test, coated panels were cut into 5.08 cm by 11.43 cm (2 inch by 4.5 inch) pieces, with the substrate grain running perpendicular to the long length of the cut panel. They were then bent over a 6.35 mm ¼ inch metal dowel along the long length of the panel with the coated side facing out. The bent coupons were then placed onto a block of metal where a wedge was pre-cut out of it with a taper of 0 to 6.35 mm (¼ inch) along a 11.43 cm (4.5 inch) length. Once placed in the wedge, each bent coupon was struck with a block of metal which weighed 2.1 kilograms from a height of 28 cm (11 inches) to form a wedge where one end of the coated metal impinged upon itself and a 6.35 mm (¼ inch) space remained on the opposite end. The wedge bent panels were then placed into an aqueous solution of copper sulfate and hydrochloric acid for two minutes to purposely etch the aluminum panel in areas where the coatings failed and cracked. The etched wedge bent panels were then examined through a microscope at 1.0x power to determine how far from the impinged end along the bent radii did the coating crack. Flex results are reported as the percentage of cracked area versus total length of the wedge bent panel. The coatings were also evaluated for their ability to adhere to the aluminum panels and to resist blushing in four aqueous solutions. 5.08 cm by 10.16 cm (2 inch by 4 inch) coated panels were placed into beakers that contained enough of the test solutions to immerse half of the coated test panels. After being immersed for the prescribed times, the coated panels were rinsed with hot water, dried, and immediately evaluated for blush on a scale of 1 (opaque) through 10 (clear), and adhesion by using a razor blade to scratch the coating eleven times, parallel and perpendicular at the interface where the coated panel was immersed. Scotch 610 tape was applied to the scribed area and quickly removed from the coating surface. Adhesion was assessed by pass or fail, pass meant 100% of the coating stuck in the scribed area, and fail meant that some of the coating was torn off with the tape. Odor was subjectively determined when the cured panels exited the conveyor oven. The results and description of the test solutions and conditions are reported in Table 3.

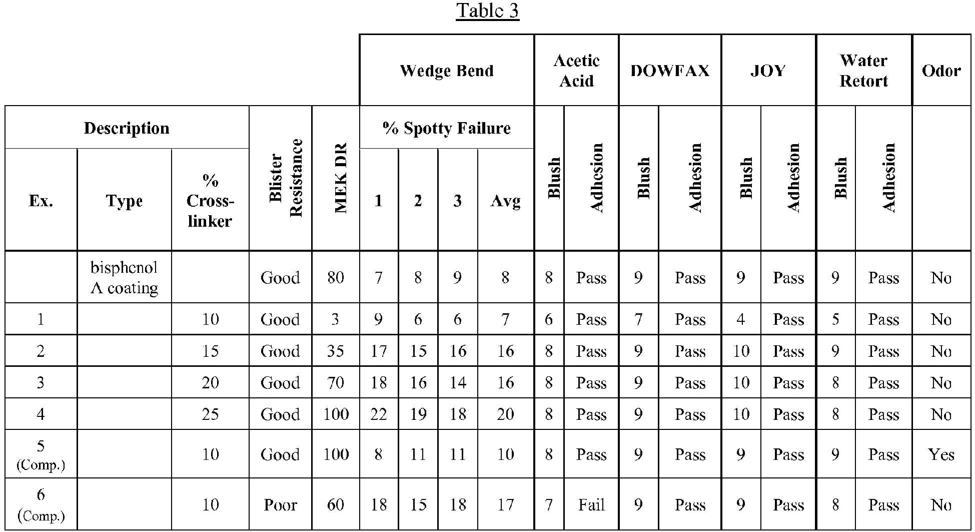

| **Test Description Key** |
|---|
| Wedge bends were soaked for 2' in aqueous 15% CuSO4/3% HCl. |
| Acetic acid: 30' boil in 3% by weight. |
| Dowfax: 10' boil in 0.17% by weight. |
| Joy: 10'/ 82°C (180F) in 1% by weight. |
| Water retort: 30'/121 C in deionized water. |

## Claims

1. An article comprising:
a) a metal substrate of a food or beverage container including a portion thereof,
b) a coating composition applied on at least a portion of the substrate, the coating composition comprising an aqueous polyurethane dispersion in which the polyurethane is the reaction product of an organic polyisocyanate and a hydrophobic polyester polyol, the hydrophobic polyester polyol being prepared by reacting an excess of polyol with a polycarboxylic acid having a hydrocarbon chain containing at least 20 contiguous carbon atoms between the carboxylic acid groups, the dispersion having an iodine value determined using ASTM D 5758-02 (Reapproved 2006) entitled "Standard Method for Determination of Iodine Values of Tall Oil Fatty Acids" of less than 5 mole equivalents of iodine per 100 grams of resin,
and containing less than 5 percent by weight vinyl monomer or
polymer in the polyurethane dispersion based on total weight of the dispersion.

2. The article of claim 1, wherein the food or beverage container comprises a 2-piece drawn food can body, a 3-piece food can body, a food can end, a drawn and iron can body, a beverage can body or a beverage can end.

3. The article of claim 1 in which the polyisocyanate is a diisocyanate, preferably the polyisocyanate is isophorone diisocyanate or
in which the hydrophobic polyester polyol is the reaction product of an organic polyol and a dimer fatty acid.

4. The article of claim 3 in which the polyester polyol has a hydroxyl value of 150 to 160 or in which the polyester polyol has a weight average molecular weight of 2000 to 4000, wherein the weight average molecular weight is measured as indicated in the specification.

5. The article of claim 3 in which the organic polyol is a diol.

6. The article of claim 5 in which the diol is 2-methyl-1,3-propanediol, or in which the dimer acid contains from 26 to 40 contiguous carbon atoms between acid groups, preferably the dimer acid contains 36 contiguous carbon atoms between acid groups.

7. The article of claim 1 in which in addition to the hydrophobic polyester polyol, the organic polyisocyanate is reacted with a polyol containing carboxylic acid groups, preferably the polyol is dimethylol propionic acid.

8. The article of claim 1 in which the polyurethane dispersion is prepared by reacting the organic polyisocyanate with the hydrophobic polyester polyol and a polyol containing carboxylic acid groups to form an NCO-prepolymer; dispersing the prepolymer in aqueous medium with base and chain extending the prepolymer with a polyamine.

9. The article of claim 1 in which the polyurethane contains active hydrogen groups.

10. The article of claim 9 in which the aqueous polyurethane dispersion contains a curing agent reactive with the active hydrogen groups, preferably the curing agent is an aminoplast.

11. A method of coating a food or beverage container comprising:
a) providing a thermally crosslinkable coating composition comprising an aqueous polyurethane dispersion in which the polyurethane is the reaction product of an organic polyisocyanate and a hydrophobic polyester polyol, the hydrophobic polyester polyol being prepared by reacting an excess of polyol with a polycarboxylic acid having a hydrocarbon chain containing at least 20 contiguous carbon atoms between the carboxylic acid groups; the dispersion having an iodine value determined using ASTM D 5758-02 (Reapproved 2006) entitled "Standard Method for Determination of Iodine Values of Tall Oil Fatty Acids" of less than 5 mole equivalents of iodine per 100 grams of resin, and containing less than 5 percent by weight vinyl monomer or polymer in the polyurethane dispersion based on total weight of the dispersion,
b) depositing the coating composition to at least a portion of a planar metal substrate,
c) heating the coated metal substrate to a peak metal temperature of at least 230° C. to form a crosslinked coating on the metal substrate, and
d) forming the metal substrate into a food or beverage can or a portion thereof.

12. The method of claim 11 in which the coating composition is applied to the food or beverage container surface of the metal substrate.

13. The method of claim 11 in which the planar substrate is a metal coil.

14. The method of claim 13 in which the metal coil is aluminum.

15. The method of claim 11 in which the metal substrate is formed into a 2-piece drawn food and beverage can body or a can end.

## Patentansprüche

1. Gegenstand enthaltend:
a) ein Metallsubstrat eines Lebensmittel- oder Getränkebehälters einschließlich eines Teils davon,
b) eine Beschichtungszusammensetzung, aufgebracht auf wenigstens einen Teil des Substrats, wobei die Beschichtungszusammensetzung eine wässrige Polyurethandispersion enthält, in der das Polyurethan das Reaktionsprodukt eines organischen Polyisocyanats und eines hydrophoben Polyesterpolyols ist, und das hydrophobe Polyesterpolyol hergestellt ist durch Umsetzen eines Überschusses an Polyol mit einer Polycarbonsäure mit einer Kohlenwasserstoffkette, die wenigstens 20 zusammenhängende Kohlenstoffatome zwischen den Carbonsäuregruppen aufweist, wobei die Dispersion eine lodzahl, gemessen unter Verwendung von ASTM D 5758-02 (Reapproved 2006) mit dem Titel "Standard Method for Determination of lodine Values of Tall Oil Fatty Acids", von weniger als 5 Moläquivalenten lod pro 100 g Harz aufweist und weniger als 5 Gew.-% Vinylmonomer oder -polymer in der Polyurethandispersion, bezogen auf das Gesamtgewicht der Dispersion, enthält.

2. Gegenstand nach Anspruch 1, wobei der Lebensmittel- oder Getränkebehälter einen zweiteiligen gezogenen Lebensmitteldosenkörper, einen dreiteiligen Lebensmitteldosenkörper, ein Lebensmitteldosenendstück, einen gezogenen Eisendosenkörper, einen Getränkedosenkörper oder ein Getränkedosenendstück umfasst.

3. Gegenstand nach Anspruch 1, wobei das Polyisocyanat ein Diisocyanat ist, vorzugweise das Polyisocyanat Isophorondiisocyanat ist, oder bei dem das hydrophobe Polyesterpolyol das Reaktionsprodukt eines organischen Polyols und einer Dimerfettsäure ist.

4. Gegenstand nach Anspruch 3, bei dem das Polyesterpolyol eine Hydroxylzahl von 150 bis 160 aufweist oder bei dem das Polyesterpolyol ein gewichtsmittleres Molekulargewicht von 2000 bis 4000 aufweist, wobei das gewichtsmittlere Molekulargewicht wie in der Beschreibung angegeben gemessen wird.

5. Gegenstand nach Anspruch 3, bei dem das organische Polyol ein Diol ist.

6. Gegenstand nach Anspruch 5, bei dem das Diol 2-Methyl-1,3-propandiol ist oder bei dem die Dimersäure 26 bis 40 miteinander verbundenen Kohlenstoffatome zwischen den Säuregruppen enthält, vorzugweise die Dimersäure 36 miteinander verbundene Kohlenstoffatome zwischen den Säuregruppen enthält.

7. Gegenstand nach Anspruch 1, bei dem zusätzlich zu dem hydrophoben Polyesterpolyol das organische Polyisocyanat mit einem Polyol umgesetzt ist, das Carbonsäuregruppen enthält, vorzugsweise das Polyol Dimethylolpropionsäure ist.

8. Gegenstand nach Anspruch 1, bei dem die Polyurethandispersion durch Umsetzen des organischen Polyisocyanats mit dem hydrophoben Polyesterpolyol und einem Polyol, das Carbonsäuregruppen enthält, um ein NCO-Präpolymer zu bilden, Dispergieren des Prepolymers in einem wässrigen Medium mit Base und Kettenverlängern des Prepolymers mit einem Polyamin hergestellt wird.

9. Gegenstand nach Anspruch 1, bei dem das Polyurethan Gruppen mit aktivem Wasserstoff enthält.

10. Gegenstand nach Anspruch 9, bei dem die wässrige Polyurethandispersion ein Härtungsmittel enthält, das mit den Gruppen, die aktiven Wasserstoff enthalten, reaktiv ist, vorzugsweise das Härtungsmittel ein Aminoplast ist.

11. Verfahren zur Beschichtung eines Lebensmittel- oder Getränkebehälters umfassend:
a) Bereitstellen einer thermisch vernetzbaren Beschichtungszusammensetzung enthaltend eine wässrige Polyurethandispersion, bei der das Polyurethan das Reaktionsprodukt eines organischen Polyisocyanats und eines hydrophoben Polyesterpolyols ist, wobei das hydrophobe Polyesterpolyol durch Umsetzen eines Überschusses an Polyol mit einer Polycarbonsäure mit einer Kohlenwasserstoffkette, die wenigstens 20 miteinander verbundene Kohlenstoffatome zwischen den Carbonsäuregruppen enthält, hergestellt wird, wobei die Dispersion eine lodzahl, bestimmt unter Verwendung von ASTM D 5758-02 (Reapproved 2006) mit dem Titel "Standard Method for Determination of lodine Values of Tall Oil Fatty Acids", von weniger als 5 Moläquivalenten lod pro 100 g Harz aufweist und weniger als 5 Gew.-% Vinylmonomer oder -polymer in der Polyurethandispersion, bezogen auf das Gesamtgewicht der Dispersion, enthält,
b) Abscheiden der Beschichtungszusammensetzung auf wenigstens einem Teil eines planaren Metallsubstrats,
c) Erwärmen des beschichteten Metallsubstrats auf eine Maximaltemperatur von wenigstens 230°C, um eine vernetzte Beschichtung auf dem Metallsubstrat zu bilden, und
d) Formen des Metallsubstrats zu einer Lebensmittel- oder Getränkedose oder einem Teil davon.

12. Verfahren nach Anspruch 11, wobei die Beschichtungszusammensetzung auf die Lebensmittel- oder Getränkebehälteroberfläche des Metallsubstrats aufgebracht ist.

13. Verfahren nach Anspruch 11, wobei das planare Substrat ein Metallcoil ist.

14. Verfahren nach Anspruch 13, wobei das Metallcoil Aluminium ist.

15. Verfahren nach Anspruch 11, in dem das Substrat zu einem zweiteiligen gezogenen Lebensmittel- und Getränkedosenkörper oder einem Dosenendstück geformt wird.

## Revendications

1. Article comprenant :
a) un support métallique d'un récipient pour aliment ou boisson y compris une partie d'un tel support,
b) une composition de revêtement appliquée sur au moins une partie du support,
la composition de revêtement comprenant une dispersion aqueuse de polyuréthane dans laquelle le polyuréthane est le produit de réaction d'un polyisocyanate organique et d'un polyester polyol hydrophobe, le polyester polyol hydrophobe étant préparé par mise en réaction d'un excès de polyol avec un acide polycarboxylique comportant une chaîne hydrocarbonée contenant au moins 20 atomes de carbone contigus entre les groupes acide carboxylique, la dispersion ayant un indice d'iode déterminé selon la méthode ASTM D 5758-02 (réapprouvée en 2006) intitulée « Méthode normalisée pour la détermination d'indices d'iode d'acides gras de tallöl » de moins de 5 équivalents molaires d'iode pour 100 grammes de résine, et contenant moins de 5 pour cent en poids de monomère ou polymère vinylique dans la dispersion de polyuréthane par rapport au poids total de la dispersion.

2. Article selon la revendication 1, dans lequel le récipient pour aliment ou boisson comprend un corps de boîte de conserve alimentaire emboutie en 2 pièces, un corps de boîte de conserve alimentaire en 3 pièces, une extrémité de boîte de conserve alimentaire, un corps de boîte de conserve en fer et emboutie, un corps de boîte de conserve pour boisson ou une extrémité de boîte de conserve pour boisson.

3. Article selon la revendication 1, dans lequel le polyisocyanate est un diisocyanate, de préférence le polyisocyanate est le diisocyanate d'isophorone ou dans lequel le polyester polyol hydrophobe est le produit de réaction d'un polyol organique et d'un acide gras dimère.

4. Article selon la revendication 3, dans lequel le polyester polyol a un indice d'hydroxyle de 150 à 160 ou dans lequel le polyester polyol a une masse moléculaire moyenne en poids de 2 000 à 4 000, la masse moléculaire moyenne en poids étant mesurée comme indiqué dans la description.

5. Article selon la revendication 3, dans lequel le polyol organique est un diol.

6. Article selon la revendication 5, dans lequel le diol est le 2-méthyl-1,3-propanediol, ou dans lequel l'acide dimère contient de 26 à 40 atomes de carbone contigus entre les groupes acides, de préférence l'acide dimère contient 36 atomes de carbone contigus entre les groupes acides.

7. Article selon la revendication 1, dans lequel en plus du polyester polyol hydrophobe, le polyisocyanate organique est mis en réaction avec un polyol contenant des groupes acide carboxylique, de préférence le polyol est l'acide diméthylol-propionique.

8. Article selon la revendication 1, dans lequel la dispersion de polyuréthane est préparée par mise en réaction du polyisocyanate organique avec le polyester polyol hydrophobe et un polyol contenant des groupes acide carboxylique pour former un prépolymère-NCO ; dispersion du prépolymère en milieu aqueux avec une base et prolongement de la chaîne du prépolymère avec une polyamine.

9. Article selon la revendication 1, dans lequel le polyuréthane contient des groupes à hydrogène actif.

10. Article selon la revendication 9, dans lequel la dispersion aqueuse de polyuréthane contient un agent durcisseur réactif avec les groupes à hydrogène actif, de préférence l'agent durcisseur est un aminoplaste.

11. Procédé de revêtement d'un récipient pour aliment ou boisson, comprenant les étapes consistant à :
a) fournir une composition de revêtement réticulable thermiquement comprenant une dispersion aqueuse de polyuréthane dans laquelle le polyuréthane est le produit de réaction d'un polyisocyanate organique et d'un polyester polyol hydrophobe, le polyester polyol hydrophobe étant préparé par mise en réaction d'un excès de polyol avec un acide polycarboxylique comportant une chaîne hydrocarbonée contenant au moins 20 atomes de carbone contigus entre les groupes acide carboxylique ; la dispersion ayant un indice d'iode, déterminé selon la méthode ASTM D 5758-02 (réapprouvée en 2006) intitulée « Méthode normalisée pour la détermination d'indices d'iode d'acides gras de tallöl » de moins de 5 équivalents molaires d'iode pour 100 grammes de résine, et contenant moins de 5 pour cent en poids de monomère ou polymère vinylique dans la dispersion de polyuréthane par rapport au poids total de la dispersion.
b) déposer la composition de revêtement sur au moins une partie d'un support métallique plan,
c) chauffer le support métallique revêtu jusqu'à une température maximale du métal d'au moins 230 °C, pour former un revêtement réticulé sur le support métallique, et
d) façonner le support métallique en une boîte de conserve pour aliment ou boisson ou une partie de celle-ci.

12. Procédé selon la revendication 11, dans lequel la composition de revêtement est appliquée sur la surface du support métallique de récipient pour aliment ou boisson.

13. Procédé selon la revendication 11, dans lequel le support plan est une bobine de métal.

14. Procédé selon la revendication 13, dans lequel la bobine de métal est en aluminium.

15. Procédé selon la revendication 11, dans lequel le support métallique est façonné en un corps de boîte de conserve pour aliment et boisson emboutie en 2 pièces ou en une extrémité de boîte de conserve.
